# EUROPÄISCHE PATENTSCHRIFT

(11) **EP 2 451 708 B1**
(45) Veröffentlichungstag und Bekanntmachung des Hinweises auf die Patenterteilung: **30.10.2013**
(21) Anmeldenummer: 10724869.2
(22) Anmeldetag: 18.06.2010
(51) Int. Cl.: B64D 13/08

(54) **KÜHLKONZEPT FÜR EIN BRENNSTOFFZELLEN-NOTSTROMSYSTEM**
COOLING CONCEPT FOR A FUEL CELL EMERGENCY POWER SYSTEM
CONCEPT DE REFROIDISSEMENT D'UN SYSTÈME D'ALIMENTATION ÉLECTRIQUE DE SECOURS À PILE À COMBUSTIBLE

(30) Priorität: 06.07.2009 DE 102009031880; 06.07.2009 US 223153 P
(43) Veröffentlichungstag der Anmeldung: 16.05.2012
(73) Patentinhaber: Airbus Operations GmbH, 21129 Hamburg (DE)
(72) Erfinder: AL-ALI, Baker, 21129 Hamburg (DE)
(74) Vertreter: Kopf, Korbinian Paul
(86) Internationale Anmeldenummer: PCT/EP2010/058677
(87) Internationale Veröffentlichungsnummer: WO 2011/003723

(56) Entgegenhaltungen:
- WO-A1-2008/014912
- US-A- 4 819 720
- US-A- 5 701 755
- US-A- 5 873 256

## Beschreibung

### TECHNISCHES GEBIET DER ERFINDUNG

Die Erfindung betrifft ein System und ein Verfahren zum Kühlen eines Geräts in einem Flugzeug, eine Verwendung eines derartigen Systems in einem Flugzeug sowie ein Flugzeug mit mindestens einem derartigen System.

### HINTERGRUND DER ERFINDUNG

In modernen Fahrzeugen jeglicher Art sind häufig Geräte für verschiedenste Zwecke integriert, die Wärme produzieren und dementsprechend gekühlt werden müssen. Durch Ausblasen von Luft durch einen Kühler in die Umgebung des Fahrzeugs wird diese Aufgabe üblicherweise recht bequem und einfach bewerkstelligt. Bei besonderen Anwendungsfällen, die etwa zu kühlende Geräte in einem Flugzeug betreffen, ist ein derartiger Austausch mit Umgebungsluft nicht jederzeit möglich. Es sind Fälle denkbar, bei denen ein Flugzeug durch ein Gebiet mit aufgewirbelter bzw. schwebender vulkanischer Asche fliegt, die mit hoher Wahrscheinlichkeit zum Ausfall der Triebwerke führt und infolgedessen die gängigen von Triebwerken abhängigen Systeme zum Bereitstellen eines Kabinendrucks funktionslos bleiben. Die gängige Maßnahme, diesem auch "TEFO" ("Total Engine Flame Out") genannten Fall zu begegnen, liegt beim Flug in Reiseflughöhe darin, die Kabine des Flugzeugs gegenüber der Umgebung zu verschließen, um ein Absinken des Kabinendrucks zu vermeiden. Die zur Druckregelung dienenden Luftauslassventile ("Outflow Valve") werden hierbei komplett verschlossen. Die Unterbrechung des geregelten Luftflusses aus der Kabine nach außen wäre demnach in Folge dafür verantwortlich, dass eine Kommunikation mit der Umgebungsluft zum Wahrnehmen von Kühlungsaufgaben nicht mehr möglich ist.

Beim Beispiel des Flugzeugs bleibend könnte zur Kühlung auch ein Wärmetauscher an der Außenseite des Flugzeugs angeordnet werden und mit Umgebungsluft durchströmt werden. Beim Durchflug eines mit vulkanischer Asche durchsetzten Gebiets könnte allerdings der Kühler vollständig verstopft werden und damit im Wesentlichen funktionslos bleiben.

Alternativ zu einer Kühlung mittels Außenluft könnten Wärme produzierende Geräte mit der vorhandenen Luft innerhalb der Kabine des Fahrzeugs gekühlt werden, was sich allerdings bei relativ stark Wärme erzeugenden Geräten zu einer deutlichen Zunahme der Temperatur in der Passagierkabine führt. Mangels Luftaustausch in der Kabine eines Flugzeugs bei Ausfall der Triebwerke würde sich allmählich, auch aufgrund der ausgeprägten Isolierung gegenüber der Außenhaut des Flugzeugs, eine unbequeme oder unerträgliche Temperatur innerhalb der Kabine bilden.

Als stark Wärme erzeugende Geräte könnten beispielsweise Brennstoffzellen angesehen werden, die im beispielhaften Falle eines Triebwerkausfalls eines Flugzeugs dazu eingesetzt werden könnten, wesentliche Systeme innerhalb des Flugzeugs mit Strom zu versorgen, so dass eine Notlandung gewährleistet werden kann. Dieser Fall bedeutet, dass erst bei vollständigem Verlust einer mit der Umgebungsluft kommunizierenden Kühlvorrichtung ein stark Wärme erzeugendes Gerät in Betrieb genommen wird.

WO 2008/014912 A1 offenbart ein Klimatisierungssystem für ein Flugzeug, bei dem eine über einen in einer Luftleitung befindlichen Wärmetauscher gekühlte Brennstoffzelle dazu eingesetzt wird, einen Kompressor zu betreiben.

US 5 873 256 A zeigt ein Befeuchtungs-/Entfeuchtungssystem, welches auf Trocknungsmitteln basiert, welches in einen heißen Luftstrom platziert wird und dabei Feuchtigkeit in den heißen, aus dem Kompressor austretenden Luftstrom abgibt, bevor er in eine Kabine eines Fahrzeugs geleitet wird.

US 5 701 755 zeigt eine Anordnung zum Kühlen elektronischer Geräte in einem Flugzeug, bei der elektronische Geräte mit einer hohen Wärmelast durch Luft gekühlt werden, die aus einer Kabine ausströmt und teilweise rezirkuliert wird, während elektronische Geräte mit einer geringen Wärmelast durch Luft gekühlt werden, die in die Kabine einströmt.

US 4 819 720 offenbart einen Hautwärmetauscher in einem Flugzeug, der in einem Kreislauf von Luft aus dedizierten Avionik-Abteilen durchströmt wird, um deren Wärme nach außen abzuführen.

### ZUSAMMENFASSUNG DER ERFINDUNG

Als Aufgabe der Erfindung könnte demnach angesehen werden, ein System zum Kühlen eines Geräts in einem Flugzeug vorzuschlagen, das nicht über die oben geschilderten Nachteile verfügt. Insbesondere soll das vorzuschlagende System eine ausreichende Kühlung bereitstellen können, die nicht mit einer deutlichen Erhöhung der Temperatur innerhalb der Passagierkabine einhergeht und gleichzeitig auch keinen Luftaustausch mit der Umgebung erfordert.

Diese Aufgabe wird gelöst durch ein System nach dem unabhängigen Anspruch 1. Vorteilhafte Weiterbildungen sind den Unteransprüchen zu entnehmen.

Ein erfindungswesentlicher Aspekt liegt darin, dass ein Wärmetauscher zum Kühlen eines Geräts in einem Flugzeug derart angeordnet ist, dass er über eine Luftfördereinrichtung von Luft aus einer Passagierkabine des Flugzeugs durchströmt werden kann, die über einen Lufteingang in den Wärmetauscher gelangt und über einen Luftausgang in einen unterhalb eines Kabinenfußbodens angeordneten und durch den Kabinenfußboden von der Passagierkabine separierten Unterflurbereich des Flugzeugs ausströmen kann. Dieser Bereich könnte bei Flugzeugen beispielsweise ein sogenannter "Unterflurbereich" sein. Die durch den Wärmetauscher erwärmte Luft verteilt sich in diesem Bereich und gibt ihre Wärme gleichmäßig an die in diesem Bereich befindlichen Luftmassen ab, die wiederum über die Außenhaut des Flugzeugs Wärme an die Umgebung des Flugzeugs abgeben.

Häufig ist in Flugzeugen die Passagierkabine mit einer stärkeren thermischen Isolierung versehen als Unterflurbereiche. Demnach könnte die Wärme in einem Unterflurbereich des Flugzeugs leichter an die Umgebung abgegeben werden, als von der Passagierkabine aus.

Hierbei ist generell anzumerken, dass sich der Unterflurbereich dennoch innerhalb des Flugzeugrumpfs befindet.

Dadurch, dass aus der Passagierkabine Luft entnommen und in einen Unterflurbereich geleitet wird, entsteht eine Druckdifferenz, die zum Nachströmen von Luft in die Passagierkabine hinein führt. Beim Flugzeug kann sich demnach eine Luftströmung von einem Unterflurbereich über Durchströmöffnungen in Sockelpaneelen (auch "Dado Panels" genannt) in die darüber liegende Passagierkabine ergeben. Da sich die erwärmte Luft in dem Unterflurbereich mit der dort vorhandenen Luft vermischt hat und stets eine gewisse Wärmeabgabe an die Umgebung stattfindet, ist die in die Passagierkabine nachströmende Luft bereits vorgekühlt. Die verbleibende Wärme wird über eine Durchmischung an die Luft in der Passagierkabine abgeben. Es ist darauf hinzuweisen, dass aus der Passagierkabine auch trotz der stärkeren Wärmeisolierung dennoch ein gewisser Wärmeübergang zur Umgebung des Flugzeugs zu beobachten ist, wenn ein Temperaturgefälle zur Umgebung herrscht. Es ist demnach damit zu rechnen, dass trotz des Wärmeeintrags zu kühlender Geräte der resultierende Anstieg der Lufttemperatur innerhalb der Passagierkabine relativ gering ist.

Zum Leiten von Luft aus der Kabine durch den Wärmetauscher wird eine Luftfördereinrichtung eingesetzt, die aktiv Luft aus der Passagierkabine durch den Wärmetauscher fördert. Dies könnte etwa ein Gebläse oder ein Lüfter sein.

Bei einer besonders vorteilhaften Weiterbildung des erfindungsgemäßen Systems befindet sich der Wärmetauscher in einem Bereich unterhalb des Kabinenfußbodens, so dass die von der geförderten Luft zurückzulegende Strecke möglichst kurz ist.

Alternativ dazu wäre es auch möglich, den Wärmetauscher direkt innerhalb des Kabinenfußbodens anzuordnen, so dass eine direkt an dem Wärmetauscher an einer von der Passagierkabine abgewandten Seite angeordnete Luftfördereinrichtung ein direktes Durchströmen des Wärmetauschers verursacht. Hierzu könnte eine entsprechende luftdurchlässige Abdeckung auf der Oberseite des Wärmetauschers im Bereich der Oberseite des Kabinenfußbodens angeordnet sein, die etwa als Lochplatte oder dergleichen ausgeführt wird. Die Integration des Wärmetauschers innerhalb des Kabinenfußbodens sollte deshalb in einem Bereich erfolgen, der möglichst wenig betreten wird.

Die Luftfördereinrichtung kann in einer weiteren vorteilhaften Ausführungsform des erfindungsgemäßen Systems als herkömmliches Rezirkulationsgebläse ausgeführt sein, das sich bei der Anwendung des erfindungsgemäßen Systems in einem Passagierflugzeug bereits ohnehin dort befindet. Dadurch wäre ein Anordnen des Wärmetauschers in der Nähe des Rezirkulationsgebläses von Vorteil, was zu einer Gewichtsersparnis und zu einer generellen Vereinfachung des erfindungsgemäßen Systems führt.

Die Erfindung wird auch durch ein Verfahren zum Kühlen eines Geräts in einem Flugzeug gemäß dem weiteren unabhängigen Anspruch gelöst. Kemmerkmal dieses erfindungsgemäßen Verfahrens liegt darin, Luft aus einer Passagierkabine des Flugzeugs durch einen Wärmetauscher in einen von der Passagierkabine durch einen Kabinenfußboden separierten Unterflurbereich zu fördern und dadurch ein Nachströmen von teilerwärmter Luft aus einem Unterflurbereich zurück in die Passagierkabine zu erzwingen.

Weiterhin wird die Aufgabe auch durch eine Verwendung eines erfindungsgemäßen Systems in einem Flugzeug gelöst sowie durch ein Notstromversorgungssystem in einem Flugzeug.

Schließlich löst auch ein Flugzeug gemäß dem weiteren unabhängigen Anspruch die obige Aufgabe. Das Flugzeug weist mindestens ein Luft atmendes Triebwerk, mindestens ein elektrische Energie benötigendes elektrisches Gerät und mindestens ein Auslassventil auf, wobei das Auslassventil bei Ausfall des Triebwerks geschlossen wird und eine Brennstoffzelle zum Erzeugen elektrischer Energie verwendet wird, wobei die Brennstoffzelle einen Wärmetauscher aufweist, der mittels einer Luftfördereinrichtung von Luft aus der Passagierkabine durchströmt wird, die sich in einem Unterflurbereich mit bereits vorhandener Luft vermischt, ihre Wärme über die Flugzeugaußenhaut zumindest teilweise abgibt und zum Druckausgleich in die Passagierkabine nachströmt.

### KURZE BESCHREIBUNG DER ZEICHNUNGEN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbeziehungen. In den Figuren stehen weiterhin gleiche Bezugszeichen für gleiche oder ähnliche Objekte.
Fig. 1 zeigt eine schematische Ansicht eines Ausführungsbeispiels des erfindungsgemäßen Systems.
Fig. 2 zeigt eine schematische Ansicht eines weiteren Ausführungsbeispiels des erfindungsgemäßen Systems.
Fig. 3 zeigt eine Kabine eines Flugzeugs im seitlichen Schnitt mit Anwendung des erfindungsgemäßen Systems und des erfindungsgemäßen Verfahrens.
Fig. 4 zeigt ein Flugzeug mit mindestens einem erfindungsgemäßen System.

### DETAILLIERTE BESCHREIBUNG EXEMPLARISCHER AUSFÜHRUNGSBEISPIELE

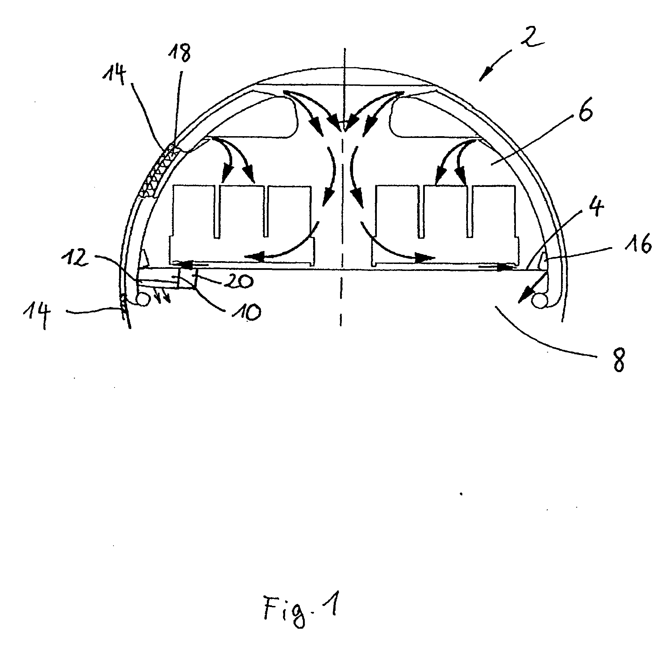

In Fig. 1 und Fig, 2 wird ein Teil eines Flugzeugrumpfs 2 gezeigt, in dem ein Fußboden 4 angeordnet ist, der eine Passagierkabine 6 und einen Unterflurbereich 8 voneinander trennt. Im Bereich des Kabinenfußbodens 4 ist ein Wärmetauscher 10 angeordnet, an dessen Unterseite, die zum Unterflurbereich 8 gewandt ist, eine Luftfördereinrichtung 12 zum Fördern von Luft aus der Kabine 6 durch den Wärmetauscher 10 in den Unterflurbereich 8 angeordnet ist.

Der Unterflurbereich 8 erstreckt sich zumindest bei einem Flugzeug über einen wesentlichen Anteil der Länge des Rumpfs 2 und wird nach außen überwiegend durch eine Primärisolierung 14 isoliert. Dies bedeutet, dass aus dem Wärmetauscher 10 strömende Luft mit der bereits in dem Unterflurbereich 8 befindlichen Luft vermischt wird, wodurch die im Unterflurbereich 8 befindliche Luft leicht erwärmt wird. Ein Teil dieser Wärme wird bei Vorliegen einer Temperaturdifferenz zwischen der Umgebung und dem Unterflurbereich 8 allerdings wieder über die Primärisolierung 14 in die Umgebung des Flugzeugrumpfs 2 abgegeben.

In Fig. 1 wird eine Konfiguration gezeigt, in der eine Rezirkulation über Rezirkulationsgebläse oder dergleichen durchgeführt wird, bei der die in die Passagierkabine 6 strömende Luft über die herkömmlichen Luftauslässe eingeleitet wird.

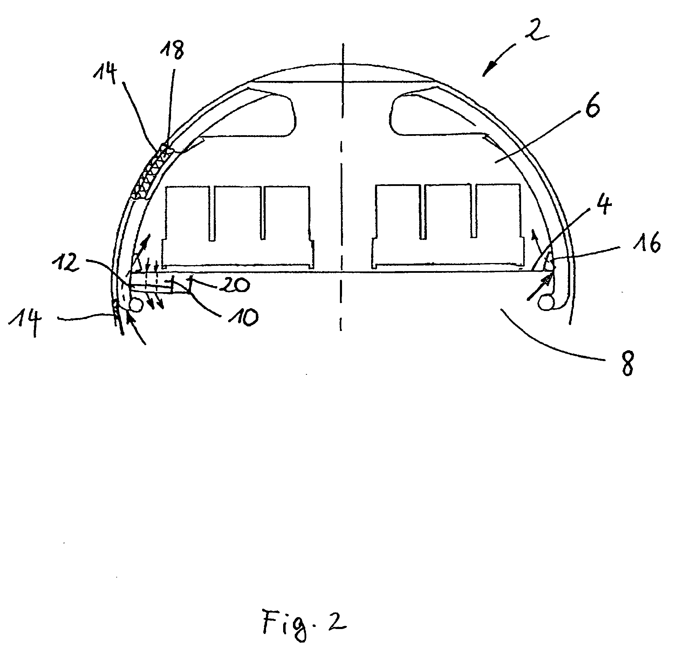

In Fig. 2 wird dagegen ein Ausführungsbeispiel gezeigt, bei der die Rezirkulation im Wesentlichen deaktiviert ist und durch das Ausströmen von Luft aus der Passagierkabine 6 innerhalb der Passagierkabine 6 ein leichter Unterdruck bzw. in dem Unterflurbereich 8 ein gewisser Überdruck entsteht, so dass ein Nachströmen von Luft aus dem Unterflurbereich 8 in die Passagierkabine 6 hinein induziert wird. Dies könnte durch eine Reihe von in dem Flugzeugrumpf entlang dessen Längsachse angeordnete Sockelpaneele 16 erfolgen (auch als "Dado-Panel" bekannt), die neben der Verwendung zur Verkleidung eines Fußboden-Wand-Übergangs in einer Passagierkabine 6 dazu dienen, eine plötzlich auftretende hohe Druckdifferenz zwischen der Passagierkabine 6 und dem Unterflurbereich 8 zu verhindern, indem sie einen stets vorhandenen Durchströmquerschnitt schlagartig vergrößern. Die pneumatische Verbindung zwischen dem Unterflurbereich 8 und der Passagierkabine 6 stellt beim regulären Betrieb der Klimaanlage eines Flugzeugs eine Luftströmung von der Passagierkabine 6 in den Unterflurbereich 8 sicher, wohingegen diese Verbindung bei Einsatz des erfindungsgemäßen Systems in umgekehrter Weise verwendet wird.

Die in die Passagierkabine 6 strömende Luft ist aufgrund der Vermischung erwärmter Abluft aus dem Wärmetauscher 10 mit der im Unterflurbereich 8 befindlichen Luft deutlich kühler als die Abluft aus dem Wärmetauscher 10 an sich. Die einströmende Luft vermischt sich mit der bereits in der Passagierkabine 6 befindlichen Luft, wodurch sich diese nur schwach erwärmt. Trotz der im Vergleich zum Unterflurbereich 8 relativ starken Wärmedämmung mit einer Primärisolierung 14 und üblicherweise einer Sekundärisolierung 18 wird bei Bestehen einer Temperaturdifferenz zwischen der Umgebung des Flugzeugs und der Passagierkabine 6 ebenfalls eine gewisse Wärme über den Flugzeugrumpf 2 nach außen geleitet und trägt somit zur stetigen Wärmeabfuhr aus der Passagierkabine 6 bei. Die Luft aus der Passagierkabine 6 wird anschließend wieder zur Kühlung durch den Wärmetauscher 10 geleitet.

Nach diesem Konzept kann lokal entstehende Wärme von einem Gerät mit Hilfe von innerhalb des gesamten Flugzeugrumpfs 2 befindlicher Luft als Wärmesenke effizient an die Umgebung abgeführt werden, ohne dass ein direkter Luftaustausch mit der Umgebung notwendig ist. Als besonderes Beispiel für ein zu kühlendes Gerät kann, wie bereits in der Beschreibungseinleitung erwähnt, eine Brennstoffzelle 20 angesehen werden, die an einem beliebigen Ort innerhalb des Flugzeugrumpfs 2 angeordnet sein könnte. Exemplarisch wird hier eine Brennstoffzelle 20 dargestellt, die sich in der Nähe des Kabinenfußbodens 4 befindet und dementsprechend eine direkte Verbindung mit dem Wärmetauscher 10 aufweisen kann.

Es ist für einen Fachmann selbstverständlich, dass die Brennstoffzelle 20 oder ein anderes Wärme erzeugendes Gerät auch von dem Wärmetauscher 10 beabstandet sein und über eine geeignete Verbindung Wärme an den Wärmetauscher abgibt. Es könnte sich beispielsweise anbieten, die Brennstoffzelle außerhalb des mit Druck beaufschlagten bzw. klimatisierten Bereichs des Flugzeugrumpfs 2 anzuordnen und über eine Flüssigkeits- oder Luftleitung mit dem Wärmetauscher 10 zu verbinden.

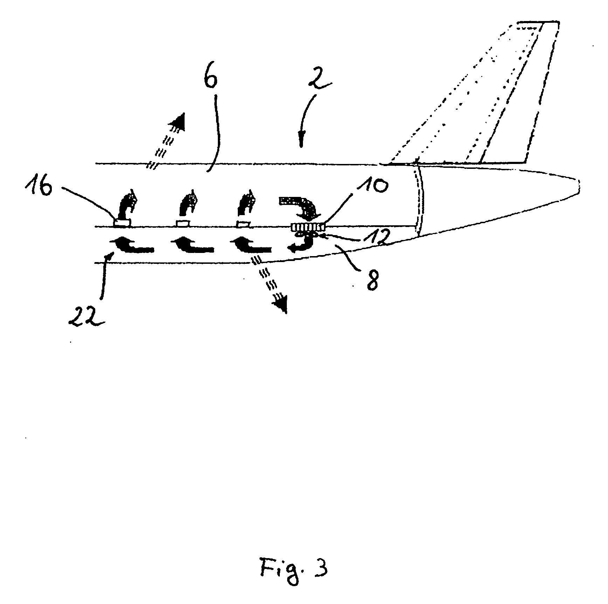

In Fig. 3 wird das Wirkungsprinzip des erfindungsgemäßen Systems weiter verdeutlicht. Die Durchmischung in einem Unterflurbereich 8 kann in einem relativ großen Volumen erfolgen, in dem auch eine relativ große Wandfläche 22 zur Wärmeübertragung in die Umgebung des Flugzeugrumpfs 2 vorhanden ist. Gleiches gilt für die Passagierkabine 6. Erfindungsgemäß wird ein größtmögliches Volumen des Flugzeugrumpfs 2 als Wärmesenke verwendet, um die Wärme effektiv und gleichmäßig an die Umgebung abzugeben. Dies könnte dazu führen, eine Vielzahl von Sockelpaneelen 16 mit einer umgekehrten Rückströmung von Luft aus dem Unterflurbereich 8 in die Passagierkabine 6 hinein zu beaufschlagen.

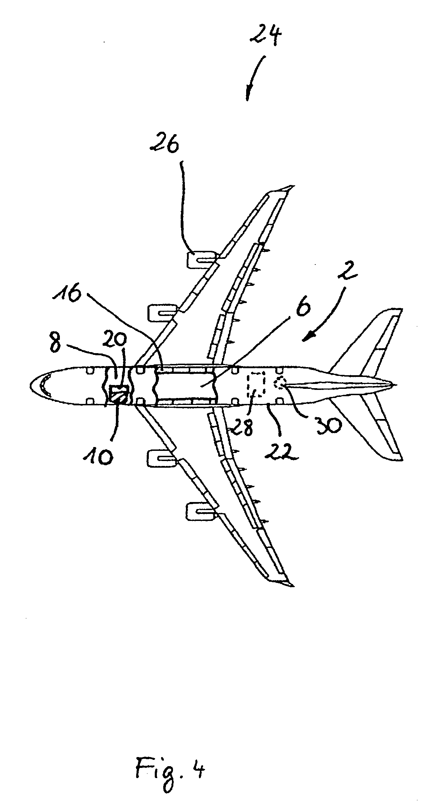

Schließlich zeigt Fig. 4 ein Flugzeug 24, mit mehreren Teilschnitten und gestrichelt dargestellten nicht sichtbaren Kanten, das mehrere Luft atmende Triebwerke 26, mindestens ein elektrische Energie benötigendes elektrisches Gerät 28 und mindestens ein Auslassventil 30 aufweist, wobei das Auslassventil 30 bei Ausfall der Triebwerke 26 geschlossen wird und eine Brennstoffzelle 20 zum Erzeugen elektrischer Energie verwendet wird, wobei die Brennstoffzelle 20 einen Wärmetauscher 10 aufweist, der mittels einer Luftfördereinrichtung 12 von Luft aus der Passagierkabine 6 durchströmt wird, die sich in einem Unterflurbereich 8 mit bereits vorhandener Luft vermischt, ihre Wärme über die Flugzeugaußenhaut 22 zumindest teilweise abgibt und zum Druckausgleich in die Passagierkabine 6 nachströmt.

Es ist darauf hinzuweisen, dass die Erfindung nicht auf die Verwendung in einem Flugzeug beschränkt ist. Vielmehr kann die Erfindung auch in solchen Flugzeugen Anwendung finden, wo ein Luftaustausch mit der Umgebung des Flugzeugs nicht möglich ist.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### BEZUGSZEICHEN

- 2: Flugzeugrumpf
- 4: Kabinenfußboden
- 6: Passagierkabine
- 8: außerhalb der Passagierkabine liegender Unterflurbereich
- 10: Wärmetauscher
- 12: Luftfördereinrichtung
- 14: Primärisolierung
- 16: Sockelpaneel
- 18: Sekundärisolierung
- 20: Brennstoffzelle
- 22: Wandfläche
- 24: Flugzeug
- 26: Triebwerk
- 28: Gerät
- 30: Auslassventil

## Patentansprüche

1. Flugzeug, aufweisend
- mindestens einen Rumpf (2) mit mindestens einer einen Kabinenfußboden (4) aufweisenden Passagierkabine (6) und mindestens einem unterhalb des Kabinenfußbodens (4) angeordneten und durch den Kabinenfußboden (4) von der Passagierkabine (6) separierten Unterflurbereich (8),
- mindestens ein Wärme abgebendes Gerät (20),
- mindestens einen Wärmetauscher (10) zum Übertragen von Wärme des Wärme abgebendes Geräts (20) an Luft und
- mindestens eine Luftfördereinrichtung (12) zum Fördern von Luft an den Wärmetauscher (10),
wobei die Passagierkabine (6) und der Unterflurbereich (8) über Durchströmöffnungen in Sockelpaneelen (16) pneumatisch miteinander in Verbindung stehen,
**dadurch gekennzeichnet, dass** die Luftfördereinrichtung (12) dazu eingerichtet ist, Luft aus der Passagierkabine (6) durch den Wärmetauscher (10) in den Unterflurbereich (8) zu fördern,
wobei der Wärmetauscher (10) dazu eingerichtet ist, die aus der Passagierkabine (6) einströmende Luft mit Wärme des Wärme abgebenden Geräts (20) zu beaufschlagen und in den Unterflurbereich (8) wieder abzugeben und dadurch eine Durchmischung der mit Wärme beaufschlagten Luft mit der in dem Unterflurbereich befindlichen Luft und eine Rückströmung von dem Unterflurbereich (8) in die Passagierkabine (6) über die Durchströmöffnungen in den Sockelpaneelen (16) zu induzieren.

2. Flugzeug nach Anspruch 1,
wobei der Wärmetauscher (10) an dem Kabinenfußboden (4) angeordnet ist.

3. Flugzeug nach Anspruch 1 oder 2,
wobei die Luftfördereinrichtung (12) ein Rezirkulationsgebläse ist.

4. Flugzeug nach einem der Ansprüche 1 bis 3,
wobei das Gerät (20) eine Brennstoffzelle zum Bereitstellen elektrischer Energie ist.

5. Verfahren zum Kühlen eines Wärme abgebenden Geräts (20) in einem Flugzeug mit einem Rumpf (2) mit einer Passagierkabine (6) und einem von der Passagierkabine (6) durch einen Kabinenfußboden (4) separierten Unterflurbereich (8), aufweisend den Schritt des Abgebens von Wärme von dem Gerät (20) an einen Wärmetauscher (10),
**gekennzeichnet durch** die Schritte:
- Fördern von Luft aus einer Passagierkabine (6) des Flugzeugs **durch** den Wärmetauscher (10) in den Unterflurbereich (8) und
- gleichzeitig Induzieren des Nachströmens von Luft aus dem Unterflurbereich (8) zurück in die Passagierkabine (6) aus einer Druckdifferenz zwischen der Passagierkabine (6) und dem Unterflurbereich (8) über Durchströmöffnungen in Sockelpaneelen (16).

## Claims

1. Aircraft, comprising
- at least one fuselage (2) with at least one passenger cabin (6) having a cabin floor (4) and with at least one underfloor region (8) arranged under the cabin floor (4) and separated from the passenger cabin (6) by means of the cabin floor (4),
- at least one heat-dissipating device (20),
- at least one heat exchanger (10) for transferring heat of the heat-dissipating device (20) to air, and
- at least one air conveying device (12) for conveying air to the heat exchanger (10),
wherein the passenger cabin (6) and the underfloor region (8) are pneumatically connected by means of flow-through openings in dado panels,
**characterized in that** the air conveying device (12) is designed to convey air from the passenger cabin (6) through the heat exchanger (10) into the underfloor region (8),
wherein the heat exchanger (10) is adapted to subject the inflowing air from the passenger cabin (6) to heat of the heat-dissipating device (20) and to dissipate it into the underfloor region (8) again and thus induce mixing of the air that has been subjected to heat with the air present in the underfloor region, and to induce a return flow from the underfloor region (8) into the passenger cabin (6) by means of the flow-through openings in the dado panels (16).

2. The aircraft of claim 1,
wherein the heat exchanger (10) is arranged at the cabin floor (4).

3. The aircraft of claim 1 or 2,
wherein the air conveying device (12) is a recirculation blower.

4. The aircraft of one of claims 1 to 3,
wherein the device (20) is a fuel cell for providing electrical energy.

5. A method for cooling a heat-dissipating device (20) in an aircraft, havinga fuselage (2) with a passenger cabin (6) and an underfloor region (8) separated from the passenger cabin (6) by means of a cabin floor (4), comprising the step of dissipating heat from the device (20) to a heat exchanger (10), **characterized by** the steps:
- conveying air from a passenger cabin (6) of the vehicle through the heat exchanger (10) into the underfloor region (8), and
- concurrently inducing of the flow of air from the underfloor region (20) back into the passenger cabin (6) from a pressure differential between the passenger cabin (6) and the underfloor region (8) through flow-through openings in dado panels (16).

## Revendications

1. Aéronef, présentant :
- au moins un fuselage (2) avec au moins une cabine passagers (6) présentant un plancher de cabine (4) et au moins une zone sous plancher (8) disposée sous le plancher de cabine (4) et séparée de la cabine passagers (6) par le plancher de cabine (4),
- au moins un appareil (20) diffusant de la chaleur,
- au moins un échangeur de chaleur (10) pour transmettre à l'air la chaleur de l'appareil (20) diffusant de la chaleur et
- au moins un dispositif de refoulement d'air (12) pour refouler l'air à l'échangeur de chaleur (10),
la cabine passagers (6) et la zone sous plancher (8) se trouvant raccordées entre elles pneumatiquement par l'intermédiaire d'ouvertures d'écoulement dans des panneaux de base (16),
**caractérisé par le fait que** le dispositif de refoulement d'air (12) est agencé pour refouler l'air de la cabine passagers (6) par l'intermédiaire de l'échangeur de chaleur (10) dans la zone sous plancher (8),
l'échangeur de chaleur (10) étant agencé pour exposer l'air affluant de la cabine passagers (à) à la chaleur diffusée par l'appareil (20) et la rediffuser dans la zone sous plancher (8) et l'air exposé à la chaleur étant ainsi amené à se mélanger à l'air se trouvant dans la zone sous plancher et à refluer de la zone sous plancher (8) dans la cabine passagers (6) par l'intermédiaire des ouvertures d'écoulement dans les panneaux de base (16).

2. Aéronef selon la revendication 1, l'échangeur de chaleur (10) étant disposé au plancher de cabine (4).

3. Aéronef selon la revendication 1 ou 2, le dispositif de refoulement d'air (12) étant un ventilateur de recirculation.

4. Aéronef selon l'une des revendications 1 à 3, l'appareil (20) étant une pile à combustible destinée à mettre de l'énergie à disposition.

5. Procédé de refroidissement d'un appareil (20) diffusant de la chaleur dans un aéronef avec un fuselage (2) avec une cabine passagers (6) et une zone sous plancher (8) séparée de la cabine passagers (6) par un plancher de cabine (6), présentant l'étape de diffusion de chaleur de l'appareil (20) vers un échangeur de chaleur (10), **caractérisé par** les étapes suivantes :
- refoulement d'air hors d'une cabine passagers (6) de l'aéronef par l'intermédiaire de l'échangeur de chaleur (10) dans la zone sous plancher (8) et
- reflux en simultané de l'écoulement d'air de la zone sous plancher (8) dans la cabine passagers (6) résultant d'une différence de pression entre la cabine passagers (6) et la zone sous plancher (8) par l'intermédiaire d'ouvertures d'écoulement dans des panneaux de base (16).
